Europäisches Patentamt

(19) European Patent Office

Office européen des brevets

(11) Publication number: **0 365 327 B1**

(12) **EUROPEAN PATENT SPECIFICATION**

(45) Date of publication of patent specification: **08.09.93** (51) Int. Cl.⁵: **C04B 38/00**

(21) Application number: **89310766.4**

(22) Date of filing: **19.10.89**

(54) Method of preparation of porous carbon material and material produced by the method.

<table>
<tr><td>

(30) Priority: **21.10.88 GB 8824780**

(43) Date of publication of application:
**25.04.90 Bulletin 90/17**

(45) Publication of the grant of the patent:
**08.09.93 Bulletin 93/36**

(84) Designated Contracting States:
**AT BE CH DE ES FR GB GR IT LI NL SE**

(56) References cited:
**EP-A- 0 200 528**
**EP-A- 0 223 574**
**FR-A- 2 385 762**
**US-A- 3 342 555**
**US-A- 4 022 875**

**CHEMICAL ABSTRACTS, vol. 75, no. 24, 13 December 1971 Columbus, Ohio, USA page 27; ref. no. 14156U & JP-A-7121446 (TOYO RUBBER INDUSTRY) 17-06-1971**

</td><td>

(73) Proprietor: **UNILEVER PLC**
**Unilever House Blackfriars P.O. Box 68**
**London EC4P 4BO(GB)**

(84) Designated Contracting States:
**GB**

(73) Proprietor: **UNILEVER N.V.**
**Weena 455**
**NL-3013 AL Rotterdam(NL)**

(84) Designated Contracting States:
**BE CH DE ES FR GR IT LI NL SE AT**

(72) Inventor: **Hitchen, David Andrew**
**54 Hillfield Road Little Sutton**
**South Wirral Cheshire(GB)**

(74) Representative: **Ford, Michael Frederick et al**
**MEWBURN ELLIS 2 Cursitor Street**
**London EC4A 1BO (GB)**

</td></tr>
</table>

**Description**

This invention relates to a method of preparation of porous carbon material and material produced by the method. The material may be in the form of a monolithic body, e.g. block or sheet, or in granular form.

It is known to form porous carbon material by carbonization of foamed organic compositions. Most disclosures relate to polyurethanes (e.g. US-A-4 124 691). US-A-3 859 421 describes carbonization of a dispersed carbon-yielding organic binder in a continuous liquid pore-forming phase. It is known to carbonize phenol/formaldehyde resins. US-A-3 342 555 and CA-A-733558 disclose carbonization of a foamed phenol/formaldehyde resin to give a product with relatively large pore size (0.1 - 0.4 mm). GB-A-2 035 282 describes carbonization of a phenol/formaldehyde resin which is absorbed in the pores of silica particles which act as a template; after carbonization the silica is removed with acid to give a porous particulate product. EP-A-196 055 describes removal of an inorganic salt from a cured phenol/formaldehyde resin, to form pores. The porous structure is then carbonized.

EP-A-223574 describes a porous carbon structure consisting of concave surfaces and having at least 80% voids and comprising cavities joined by interconnecting pores, with a density of less than 0.5 g/cm$^3$. This structure is made by carbonization, achieved by heating up, to for example 1000°C with careful control of heating rate, certain porous vinyl-type polymeric materials. These materials are made by polymerization of a high internal phase emulsion comprising as a non-aqueous continuous phase a monomer and cross-linking agent and as the discontinuous or internal phase water or an aqueous solution.

It has now been found that porous carbon materials, which are similar to those of EP-A-223574 but improved in some respects, can be made by carbonization of porous polymeric structures formed in a different manner, in particular by condensation polymerization of the continuous phase of a high internal phase emulsion. The continuous phase is aqueous and the internal phase is non-aqueous. It is therefore an object of the invention to provide an improved porous carbon material and an improved method of preparing it.

According to the present invention there is provided a method of preparing a porous carbon material, comprising (a) forming a carbonizable polymer structure having a porous structure of cells and optionally pores interconnecting the cells by condensation polymerization in which polymerization precursors are present in the continuous phase of a high internal phase oil-in-water emulsion and (b) carbonizing the carbonizable polymer structure by heating in an inert atmosphere to at least 500°C. The internal (oil) phase of the emulsion is preferably at least 74% by volume. The carbonized product may have a void volume as high as 90-96%.

The porous carbon material of the invention has, like that of EP-A-223574, generally concave surfaces, with generally spherical cells. The average cell size is preferably in the range 1-100 $\mu$m. The pores or holes interconnecting the cells may have a mean size of less than the average cell size and 0 $\mu$m (representing closed cells) to 80 $\mu$m, preferably 0.1-50 $\mu$m, more preferably 0.5-10 $\mu$m. The carbonizable polymer structure having closed cells requires slow drying to remove the internal phase before carbonization.

By the invention, it is possible to achieve a narrow range of size of the interconnecting pores in a carbonized body. Preferably this size range is substantially in the range 40% to 250% of the mean pore size, more preferably 50% to 200%.

Generally, the heating step for carbonization can be as described in EP-A-223574. In the present invention, the temperature rise rate is preferably not more than 2°C per minute between 300°C and 500°C, more preferably between 200°C and 700°C. Preferably the carbonization is conducted so that the bulk volume shrinkage of the polymer structure is in the range 40-60%, and preferably also the void fraction (i.e. the void volume expressed as a percentage of the bulk volume) remains substantially unchanged. The porous carbon structure may be produced substantially free of microcracks.

The porous carbon structure of the invention may be a monolithic body, such as a block or sheet, made from a carbonizable polymer structure in the form of a block or sheet. Alternatively, the carbonizable product of the polymerization step may be granulated before carbonization, to produce a particulate porous carbon material.

Methods of making the porous carbonizable polymer structure by condensation polymerization are fully described in EP-A-289238, the contents of which are herein incorporated by reference. In the present invention, it is preferred to use a cross-linked polymer for carbonization. Generally preferred in the present invention are condensation polymerization systems based on phenols and aldehydes, e.g. phenol/formaldehyde, resorcinol/formaldehyde and orcinol/formaldehyde. Polyvinyl alcohol may be included in the phenol-formaldehyde system. Alternative useful systems are urea-formaldehyde, melamine-formaldehyde and systems based on the condensation of an organic amino group and an organic acid group. Pre-polymerization may be necessary before formation of the emulsion.

The internal phase in the emulsion is non-polar and is desirably a material which evaporates on heating and is not degraded to form a residue. Alkanes, e.g. cyclohexane, heptane, paraffins, in particular are preferred since they do not need drying out of the polymerization product, but evaporate on heating for carbonization. This is an advantage over the process of EP-A-223574 which uses vinyl-type porous polymers which must be washed before carbonization.

One advantage obtainable with the method of the present invention, compared with that of EP-A-223574 can be better retention of shape of the carbonizable polymer structure during carbonization. Shrinkage occurs uniformly during carbonization, and distortion of the structure can be avoided. Another advantage can be higher yield. A third advantage can be higher compressive strength at the same void volume in the carbonized product, perhaps due to an absence of, or fewer, microcracks.

The structure and appearance of the porous carbon material produced in the present invention are similar to those of the materials of EP-A-223574 and reference should be made to that specification for an illustration.

The porous carbon material producred by the present invention has many uses, e.g. as adsorbent, and in catalysis, filtration and chromatography.

The invention will now be illustrated by examples and one comparative example.

The following standard procedure was used:-

High internal phase emulsions were formed as follows. An aqueous solution of condensation polymer precursor was mixed with a surfactant. To the mixture, while stirring, was slowly added an immiscible oil internal phase up to the appropriate phase volume. The stirrer used was a Teflon (Registered Trade Mark) blade 6 cm diameter and about 1 cm high at its mid-point rotated about a vertical axis. The resulting emulsion was stirred as required to form internal phase droplets of the desired size distribution. An acid polymerization catalyst was then added and then thoroughly stirred in. The resulting castable fluid was cured at an appropriate temperature into a porous monolithic body and dried.

The dry condensation polymer bodies were then subject to controlled pyrolysis in an oxygen-free nitrogen purged atmosphere using a T105/6 furnace of Severn Scientific Ltd. and a 1000 mm x 80 mm diameter mullite work tube in conjunction with a Eurotherm 820 programmer-controller.

Traces of water were removed from the inlet gas by passing it over a molecular sieve and phosphorus pentoxide prior to passing through the work tube. A gas flow rate of typically 1.7 $cm^3s^{-1}$ was maintained throughout the temperature program. The heating rate was limited to minimised stress-cracking of the polymer during carbonization.

Details are given in each Example below.

Two temperature profiles were used in the carbonization step:-

```
Profile 1

from    25°C   to   160°C              2°C per minute

from   160°C   to   700°C              1°C per minute

from   700°C   to 1000°C               2°C per minute

at    1000°C        dwell for 60 minutes

from  1000°C   to    25°C              1°C per minute

Profile 2

from    25°C   to   160°C              2°C per minute

from   160°C   to   600°C              1°C per minute
```

```
from   600°C  to 1100°C                 2°C per minute

at    1100°C      dwell for 120 minutes

from 1100°C  to   25°C                  2°C per minute.
```

All of the carbonizable porous polymer structures of this invention were salmon-pink on polymerization, changing to rust brown over several days.

Example 1

| Continuous phase | phenol-formaldehyde resin* - 15 g |
| | water - 8 g |
| | *phenol-formaldehyde pre-polymer |
| | formed as described in |
| | "Experimental Plastics" (C A |
| | Redfern and J Bedford, 2nd |
| | Edition, 1980, Iliffe & Sons Ltd. |
| | page 7) |
| Internal phase | light liquid paraffin - 50 ml |
| Emulsion, internal | |
| phase volume | - 82% |
| Polymerization catalyst | toluene-4 sulphonic acid (70% w/v) |
| | - 6 g |
| Mixing | 5 mins, 500 rpm |
| Surfactant | Mirinol+ C2M-SF conc - 25 g |
| | + Mirinol is an amphoteric |
| | surfactant of Venture Chemical |
| | Products Ltd., Tilehurst, Reading, |
| | UK. Mirinol is a Registered Trade Mark |
| Curing | 12 hours, 60°C |
| Carbonization profile | 1 |

Example 2

| | |
|---|---|
| Continuous phase | phenol-formaldehyde resin* - 15 g |
| | water - 8 g |
| | * as in Example 1 |
| Internal phase | light paraffin - 170 ml |
| Emulsion, internal phase volume | - 92% |
| Polymerization catalyst | toluene-4 sulphonic acid (70% w/v) - 6 g |
| Mixing | 5 mins, 500 rpm |
| Surfactant | Mirinol C2M-SF conc - 25 g |
| Curing | 12 hours, 60°C |
| Carbonization profile | 1 |

Example 3

| | |
|---|---|
| Continuous phase | phenol-formaldehyde resin* - 15 g |
| | polyvinyl alcohol (mol.wt. 72000) |
| , | - 1.2 g |
| | aqueous 40% w/v formaldehyde - 3 ml |
| | * as in Example 1 |
| Internal phase | light paraffin - 110 ml |
| Emulsion, internal | |
| phase volume | - 94% |
| Polymerization catalyst | toluene-4 sulphonic acid (70% w/v) |
| | - 6 g |
| Mixing | 5 mins, 500 rpm |
| Surfactant | Mirinol C2M-SF conc - 25 g |
| Curing | 12 hours, 60°C |
| Carbonization profile | 1 |

Example 4

Continuous phase         phenol-formaldehyde resin* - 15 g

aqueous 40% w/v formaldehyde - 8 g

* as in Example 1

Internal phase           light paraffin - 170 ml

Emulsion, internal

   phase volume         - 93%

Polymerization catalyst  toluene-4 sulphonic acid (70% w/v)

- 6 g

Mixing                5 mins, 500 rpm

Surfactant            Mirinol C2M-SF conc - 25 g

Curing                12 hours, 60°C

Carbonization profile    1

Example 5

| Continuous phase<br>Internal phase<br>Emulsion, internal phase volume | resorcinol - 16.6 g aqueous 40% w/v formaldehyde - 24.4 g<br>cyclohexane - 360 ml<br>- 90 % |
|---|---|
| Polymerization catalyst | conc HCl - 1.7 ml<br>water - 20 ml |
| Mixing<br>Surfactant<br>Curing<br>Carbonization profile | 1 min, 800 rpm<br>Mirinol C2M-SF conc - 4.54 g<br>10 mins, 25°C<br>2 |

8

Example 6

| Continuous phase | resorcinol - 16.6 g<br>aqueous 40% w/v formaldehyde - 24.4 g |
|---|---|
| Internal phase<br>Emulsion, internal phase volume | n-heptane - 360 ml<br>- 90 % |
| Polymerization catalyst | conc HCl - 1.9 ml<br>water - 20 ml |
| Mixing<br>Surfactant<br>Curing<br>Carbonization profile | 2 min, 500 rpm<br>Mirinol C2M-SF conc - 4.54 g<br>5 mins, 25°C<br>1 |

Example 7

| Continuous phase | resorcinol - 16.6 g<br>aqueous 40% w/v formaldehyde - 24.4 g |
|---|---|
| Internal phase<br>Emulsion, internal phase volume | n-heptane - 360 ml<br>- 90 % |
| Polymerization catalyst | conc HCl - 1.9 ml<br>water - 20 ml |
| Mixing | 2 mins, 500 rpm<br>10 mins, 800 rpm |
| Surfactant<br>Curing<br>Carbonization profile | Mirinol C2M-SF conc - 4.54 g<br>5 mins, 25°C<br>1 |

Chemical analysis of carbonizable polymer and carbon product:

| carbonizable polymer | C 60.15% | H 4.96% |
|---|---|---|
| carbonized product | C 96.80% | H 0.62% |

Example 8

| Continuous phase | resorcinol - 24.9 g<br>aqueous 40% w/v formaldehyde - 36.6 g |
|---|---|
| Internal phase<br>Emulsion, internal phase volume | n-heptane - 204 ml<br>- 80 % |
| Polymerization catalyst | conc HCl - 3.8 ml<br>water - 20 ml |
| Mixing<br>Surfactant<br>Curing<br>Carbonization profile | 2 mins, 500 rpm<br>Mirinol C2M-SF conc - 6.82 g<br>5 mins, 25 °C<br>1 |

Example 9

| Continuous phase | resorcinol - 24.9 g<br>aqueous 40% w/v formaldehyde - 36.6 g |
|---|---|
| Internal phase<br>Emulsion, internal phase volume | n-heptane - 204 ml<br>- 80 % |
| Polymerization catalyst | conc HCl - 3.8 ml<br>water - 20 ml |
| Mixing | 2 mins, 500 rpm<br>10 mins, 800 rpm |
| Surfactant<br>Curing<br>Carbonization profile | Mirinol C2M-SF conc - 6.82 g<br>5 mins, 25 °C<br>1 |

Various calculations and measurements of structure and strength were made in respect of the intermediate carbonizable polymer and the final porous carbon product of each of Examples 6 to 9 and of the Comparative Example A. The results are set out in Table 1. The products of the Examples of the invention and of Comparative Example A consist of a carbonized monolithic matrix having a porosity formed by cells interconnected by pores.

The Comparative Example A is a porous carbon body formed from a vinyl polymer according to the process of EP 223574, using as the continuous phase of the emulsion methacrylonitrile 7cc, divinylbenzene (55% solution in ethylvinylbenzene) 4cc, surfactant Span 80 (ICI) 2g, and as the internal phase 100cc aqueous solution of initiator (potassium persulphate 2.5 g/l (0.013 molar) and $CaCl_2$ 0.1 molar).

The results show considerably higher strength achieved with the process of the present invention. Note that the carbonized body of the Comparative Example has a smaller cell size and therefore may be expected to be stronger than the bodies of Examples 8 and 9 of the same void volume. In fact it is weaker.

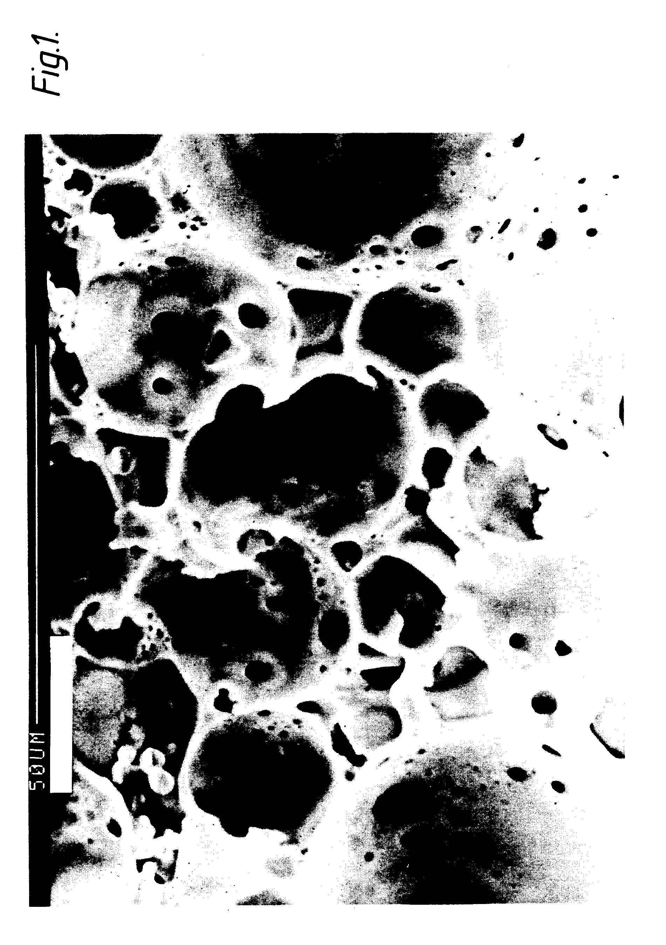

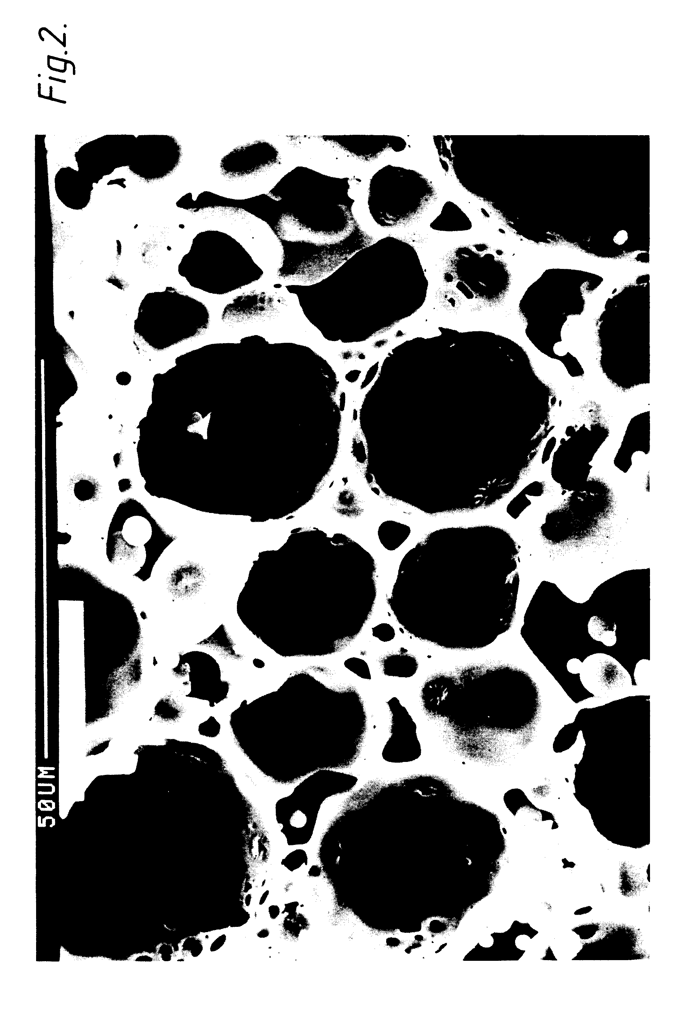

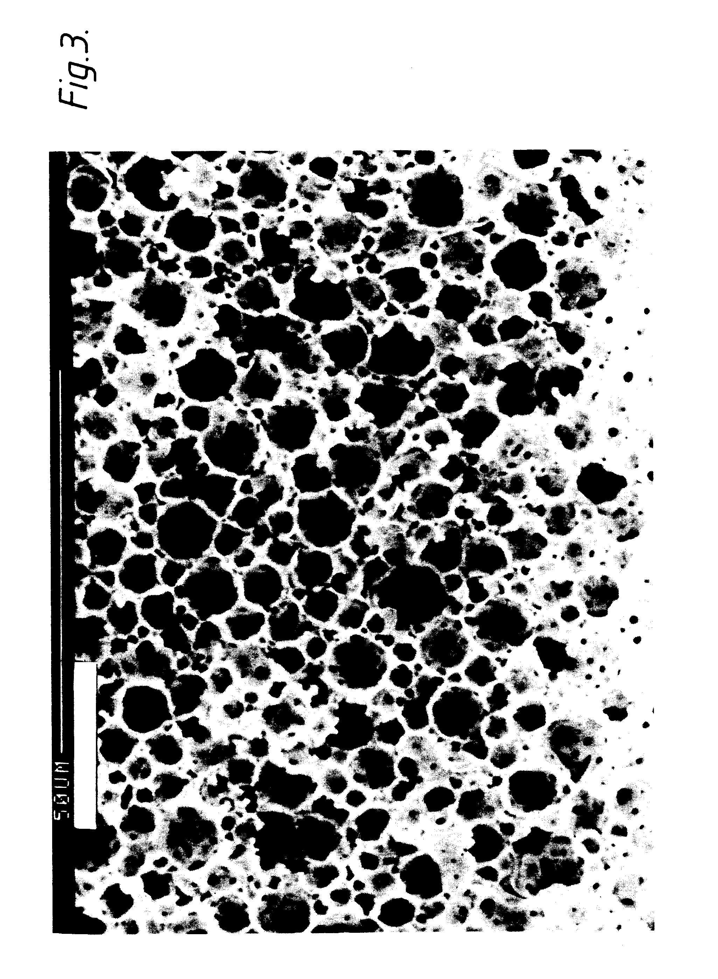

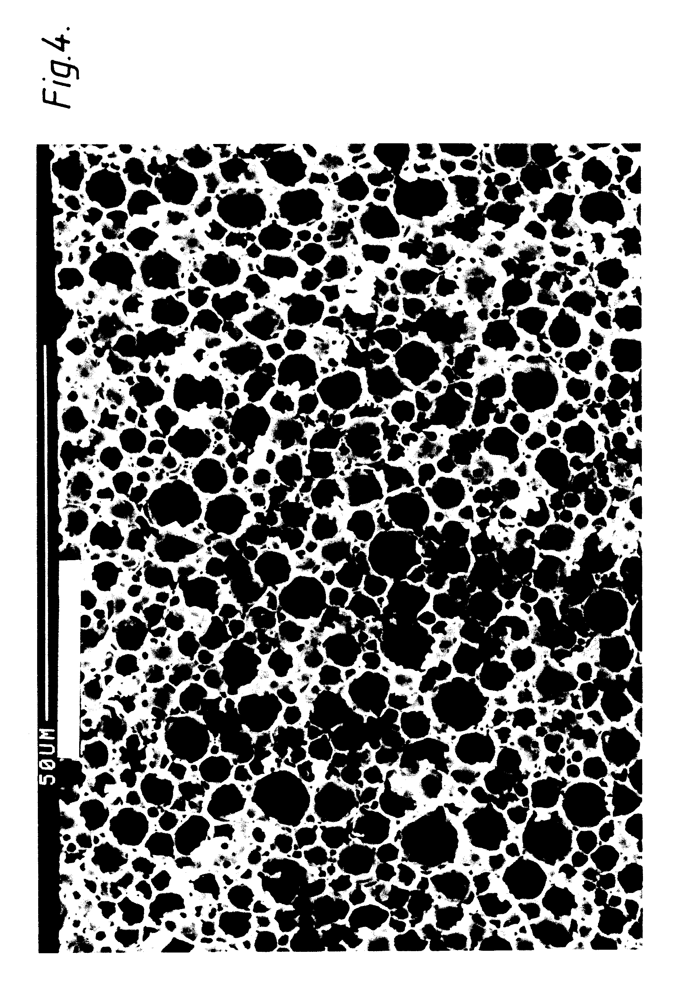

The four Figures accompanying this specification are SEMs (Scanning Electron Micrographs) obtained in conventional manner. The magnification is given by the scale bar. Fig. 1 shows the carbonizable polymer of Example 8 and Fig. 2 shows the carbon body produced in Example 8. Likewise, Figs. 3 and 4 are respectively the carbonizable polymer and the carbon body of Example 9.

TABLE 1

| Example | 6 | 7 | 8 | 9 | A |
|---|---|---|---|---|---|
| **Carbonizable polymer** | | | | | |
| density g.cm$^{-3}$ | 0.079 | 0.084 | 0.14 | 0.14 | 0.068 |
| void volume (%)[+] | 94 | 93 | 89 | 89 | 90 |
| compressive modulus (Nm$^2$ x 10$^{-6}$) | 6.8 | 5.1 | 10 | 17 | 4.8 |
| compressive strength (Nm$^2$ x 10$^{-6}$) | 0.74 | 0.8 | 1.7 | 2.0 | 0.6 |
| mean cell size (μm)[++] | 50 | 10 | 25 | 5 | 2 |
| mean pore size (μm)[+++] | 5 | 1.3 | 5 | 0.8 | - |
| **Carbon body** | | | | | |
| density g.cm$^{-3}$ | 0.092 | 0.086 | 0.14 | 0.14 | 0.10 |
| void volume (%)[+] | 94 | 94 | 90 | 90 | 90 |
| compressive modulus (Nm$^2$ x 10$^{-6}$) | 10 | 15 | 20 | 30 | 18 |
| compressive strength (Nm$^2$ x 10$^{-6}$) | 1.5 | 2.0 | 3.5 | 5.2 | 2.3 |
| mean cell size (μm)[++] | 40 | 10 | 15 | 5 | 2 |
| mean pore size (μm)[+++] | 5 | 1.0 | 4 | 0.6 | - |
| pore size range (μm)[+++] | 2-12 | 0.5-2 | 2-6 | 0.3-1.1 | - |

Notes for Table 1

+   calculated assuming density of solid resorcinol-formaldehyde polymer is 1.26 g.cm$^{-3}$, density of polymethacrylonitrile is 1.1 g.cm$^{-3}$ and density of amorphous carbon is 1.45 g.cm$^{-3}$

++  estimated from scanning electron microscope pictures

+++ obtained by mercury intrusion porosimetry

All the carbonizable polymers in the Examples of the invention had electrical resistivities greater than $10^{12}$ Ω.m. All the carbonized materials had electrical resistivities of less than 1 Ω.m. All the carbonized bodies in the Examples are substantially crack free.

**Claims**

1.  A method of preparing a porous carbon material, comprising (a) forming a carbonizable polymer structure having a porous structure of cells and optionally pores interconnecting the cells by condensation polymerization in which polymerization precursors are present in the continuous phase of a high internal phase oil-in-water emulsion and (b) carbonizing the carbonizable polymer structure by heating in an inert atmosphere to at least 500°C.

2.  A method according to claim 1 wherein the internal (oil) phase of the emulsion is at least 74% by volume.

3.  A method according to claim 1 or claim 2 wherein the average cell size of the porous carbon material produced is in the range 1 - 100 $\mu$m.

4.  A method according to any one of claims 1 to 3 wherein the porous carbon material produced has pores interconnecting said cells, of an average size less than the average cell size and in the range 0.1 to 50 $\mu$m.

5.  A method according to any one of claims 1 to 4 wherein in step (b), the carbonizable polymer is heated up at a temperature rise rate of not more than 2°C per minute between 300 and 500°C.

6.  A method according to claim 5 wherein the heating in step (b) is conducted to at least 700°C and the temperature rise rate between 200 and 700°C is not more than 2°C per minute.

7.  A method according to any one of claims 1 to 6 wherein the polymerization precursors are a condensation polymerization system selected from the group comprising
    a phenol-aldehyde system,
    a urea-formaldehyde system,
    a melamine-formaldehyde system, and
    a system based on condensation of an organic amino group and an organic acid group.

8. A method according to any one of the preceding claims wherein the internal phase in the emulsion is a material which evaporates on heating without forming a residue.

9. A method according to claim 8 wherein the internal phase in the emulsion is an alkane or mixture of alkanes.

**Patentansprüche**

1. Verfahren zur Herstellung eines porösen Kohlenstoffmaterials, das umfaßt: (a) die Bildung einer carbonisierbaren Polymerstruktur mit einer porösen Struktur von Zellen und fakultativ die Zellen verbindenden Poren durch Kondensationspolymerisation, bei der in der kontinuierlichen Phase einer Öl-in-Wasser-Emulsion mit hoher innnerer Phase Polymerisaitonsvorläufer vorliegen, und (b) das Carbonisieren der carbonisierbaren Polymerstruktur durch Erhitzen auf mindestens 500°C in einer inerten Atmosphäre.

2. Verfahren nch Anspruch 1, worin die innere (Öl-)phase der Emulsion mindestens 74 Vol.-% beträgt.

3. Verfahren nach Anspruch 1 oder 2, worin die durchschnittliche Zellgröße des hergestellten porösen Kohlenstoffmaterials im Bereich von 1 bis 100 $\mu$m liegt.

4. Verfahren nach irgendeinem der Ansprüche 1 bis 3, worin das hergestellte poröse Kohlenstoffmaterial die Zellen verbindende Poren einer durchschrittlichen Größe aufweist, die kleiner als die durchschnittliche Zellgröße ist und im Bereich von 0,1 bis 50 $\mu$m liegt.

5. Verfahren nach irgendeinem der Ansprüche 1 bis 4, worin in Schritt (b) das carbonisierbare Polymer zwischen 300 und 500°C mit einer Geschwindigkeit des Temperaturanstiegs von nicht mehr als 2°C/min erhitzt wird.

6. Verfahren nach Anspruch 5, worin das Erhitzen in Schritt (b) auf mindestens 700°C durchgeführt wird und die Geschwindigkeit des Temperaturanstiegs zwischen 200 und 700°C nicht mehr als 2°C/min beträgt.

7. Verfahren nach irgendeinem der Ansprüche 1 bis 6, worin die Polymerisationsvorläufer ein Kondensationspolymerisationsystem sind, ausgewählt aus der Gruppe, die umfaßt:
    ein Phenol/Aldehyd-System,
    ein Harnstoff/Formaldehyd-System
    ein Melamin/Formaldehyd-System und
    ein System, basierend auf der Kondensation einer organischen Aminogruppe und einer organischen Säuregruppe.

8. Verfahren nach irgendeinem der vorhergehenden Ansprüche, worin die innere Phase der Emulsion ein Material ist, das beim Erhitzen ohne Bildung eines Rückstandes abdampft.

9. Verfahren nach Anspruch 8, worin die innere Phase der Emulsion ein Alkan oder eine Mischung von Alkanen ist.

**Revendications**

1. Procédé de préparation d'un matériau carboné poreux, comprenant (a) la formation d'une structure polymère carbonisable ayant une structure poreuse d'alvéoles et éventuellement des pores de communication reliant les alvéoles entre elles, par polymérisation avec condensation, dans laquelle des précurseurs de polymérisation sont présents dans la phase continue d'une émulsion huile dans l'eau à forte teneur en phase interne, et (b) la carbonisation de la structure polymère carbonisable, par chauffage dans une atmosphère inerte, à au moins 500°C.

2. Procédé selon la revendication 1, dans lequel la phase interne (huile) de l'émulsion représente au moins 74% en volume.

**3.** Procédé selon la revendication 1 ou 2, dans lequel la dimension moyenne des alvéoles du matériau carboné poreux produit est dans la gamme de 1 - 100 $\mu$m.

**4.** Procédé selon l'une quelconque des revendications 1 à 3, dans lequel le matériau carboné poreux produit possède des pores de communication reliant lesdites alvéoles entre elles, dont la dimension moyenne est inférieure à la dimension moyenne des alvéoles et se situe dans la gamme de 0,1 à 50 $\mu$m.

**5.** Procédé selon l'une quelconque des revendications 1 à 4, dans lequel, dans l'étape (b), le polymère carbonisable est chauffé à une vitesse de montée en température d'au plus 2°C par minute entre 300 et 500°C.

**6.** Procédé selon la revendication 5, dans lequel le chauffage de l'étape (b) est réalisé jusqu'à au moins 700°C et la vitesse de montée en température entre 200 et 700°C ne dépasse pas 2°C par minute.

**7.** Procédé selon l'une quelconque des revendications 1 à 6, dans lequel les précurseurs de polymérisation sont un système de polymérisation avec condensation choisi dans le groupe comprenant
un système phénol-aldéhyde,
un système urée-formaldéhyde,
un système mélamine-formaldéhyde, et
un système basé sur la condensation d'un groupe amino organique et d'un groupe acide organique.

**8.** Procédé selon l'une quelconque des revendications précédentes, dans lequel la phase interne de l'émulsion est une substance qui s'évapore par chauffage sans former de résidu.

**9.** Procédé selon la revendication 8, dans lequel la phase interne de l'émulsion est un alcane ou un mélange d'alcanes.

14

## Fig1.

Fig.2.

Fig.3.

Fig.4.